# EUROPEAN PATENT SPECIFICATION

(11) **EP 1 645 176 B1**
(45) Date of publication and mention of the grant of the patent: **27.02.2013**
(21) Application number: 05108537.1
(22) Date of filing: 16.09.2005
(51) Int. Cl.: A01B 61/02, A01B 59/042

(54) **Draw bar assembly for a work vehicle**
Deichselaufbau für Arbeitsfahrzeug
Assemblage de timon pour véhicule de travail

(30) Priority: 05.10.2004 US 958921
(43) Date of publication of application: 12.04.2006
(73) Proprietor: CNH Italia S.p.A., 10135 Torino (IT)
(72) Inventor: Posselius, John H., Mount Joy, PA 17555 (US); Smith, Kevin M., Narvon, PA 17555 (US)
(74) Representative: CNH IP Department

(56) References cited:
- US-A- 4 393 943
- US-A- 4 575 112
- US-A- 5 236 214

## Description

The present invention relates generally to the field of farm machinery, such as a tractor, and more particularly to an improved drawbar assembly in which both position and load changes affecting the drawbar (and thus the farm machine) may be accommodated, either automatically or manually by the machine operator.

Farm vehicles (e.g. tractors) have improved over the years, both as to comfort for the operator of the vehicle as it moves over rough terrain, and for increasing the efficiency of operation by allowing for increased operating speeds. More recently, increased attention has been given to adding suspension to the axles and cabs of tractors to improve operator comfort and allow for faster over-ground speed. However, nothing much has been done to increase the effectiveness of shock absorption on the drawbar because of variations in load inertia of the pulled or towed implement (e.g. wagon, hay mower, etc.). Moreover, it is difficult to set the proper length of the drawbar and to allow for minimizing localized side loading on the frame of the tractor by excessive angularity of the towed implement. As will become evident hereinafter, the side loading becomes distributed by a sleeve that, while allowing for coaxial movement of the drawbar, inhibits lateral or angular movement within the plane of the drawbar.

Instances of attempts to cushion or shock absorb the variations in loading on drawbars due to changes in inertia of towed implements are replete in the art. However, while allowing for some load variation, none of the shock absorbers is adjustable to accommodate wide load variations while limiting the load changes coaxially of the drawbar. Moreover, altering the changes in length of the drawbar while maintaining the adjustability of the shock absorber to accommodate varying loads is only accomplished with difficulty. US-A-4,393,943 discloses a forestry cultivation instrument attached to a telescoping carrier. When an obstacle is encountered the carrier may telescope outwardly thereby reducing shock loading to both the vehicle and the attachment. Both carrier members are movable relative to one another and connected to a damped hydraulic system. Additionally two piston-cylinder devices can lift and/or swing the implement to avoid obstacles. Another example, US-A-3,649,048 issued on March 14, 1972 illustrates a tow bar with a single fluid action cylinder including a damper, but mounted so as to permit a pivoting relation between the mounting bracket and both horizontal and vertical planes. There is no rigidity to inhibit lateral motion of the drawbar, and while length of the drawbar may be altered, excessive changes in load inertia will necessitate the continued alteration of hydraulic pressure to restitute the drawbar position.

In US-A-4,018,452 issued on April 19, 1977, a pair of push-pull couplings are employed utilizing rubber rings and inter-digitated steel plates which in combination act as shock absorbers. The design of the shock absorbers is such that a single pair of shock absorbers has an ideal operating parameter, but with wide variations in loading and inertial changes, there is no wide variation in parameters permitted. Moreover, the design of the drawbar assembly makes it difficult if not impossible to limit loading and variations thereof along the axis of the drawbar. Other prior art may be best characterized or classified by those which utilize springs or hydraulic cylinders for shock absorbing, they have a single preferred operating point and are not well suited for wide load variations.

It is an object of the present invention to overcome the above disadvantages of the prior art by providing an improved drawbar assembly in which both position and load changes affecting the drawbar may be accommodated by the machine operator.

According to the present invention as claimed a drawbar assembly is utilized to connect a farm vehicle, such as a tractor, to a towed implement, the assembly comprising a drawbar having an extended end for coupling to the towed implement. A sleeve is supplied for secure attachment to the frame of the farm vehicle, and dimensioned interiorly thereof to embrace the drawbar and allow sliding, reciprocating, co-axial movement of the drawbar in the sleeve. At least one hydraulic cylinder comprising a casing, housing a hydraulically actuable piston and rod assembly therein, with the rod extensible beyond the casing, is provided. One of the rod and casing is connected to the drawbar, and the other of the rod and casing for connection to the farm vehicle. A hydraulic system is connected to the hydraulic cylinder to effect adjustment of the rod relative to the casing and to withstand pressure overloads caused by shocks to the drawbar; in this manner, both position and load changes affecting the drawbar may be accommodated in the hydraulic cylinder. An accumulator is connected to a variable pressure relief valve for absorbing shock loads. The hydraulic system further comprises means to inhibit gradual increase from being applied through the pressure relief valve to the accumulator.

In one of the preferred embodiments, a single hydraulic cylinder is employed with a combined action for adjustment of the drawbar along its longitudinal axis and to facilitate shock absorption with inertial load changes in the towed implement which may be connected to the drawbar. In another of the preferred embodiments, a pair of hydraulic cylinders is placed in parallel to facilitate more control of drawbar positioning and to increase the operating parameters for greater loads and shock absorption created by the towed implement.

The sleeve of the drawbar assembly may include a lubricant to facilitate ease of axial movement of the drawbar. The sleeve of the drawbar assembly may include a lubricating interface between the drawbar and the interior of the sleeve, to facilitate ease of axial movement of the drawbar. The drawbar assembly may further include a sensor mounted for indicating the axial position of the drawbar and mounted on the tractor, a programmed microprocessor for receiving an input signal from the sensor and a hydraulic pump connected to the hydraulic cylinder to position the cylinder according the input signal received from the sensor.

The invention will now be described in further detail, by way of example, with reference to the accompanying drawings, in which:
FIGURE 1 is a fragmentary side elevation of a tractor schematically illustrating a drawbar assembly constructed in accordance with the present invention;
FIGURE 2 is a schematic view in plan of the tractor illustrated in FIGURE 1, with portions thereof removed to illustrate selected elements of the conventional portions of the tractor; and the placement of a first embodiment of the drawbar assembly of the present invention;
FIGURE 3 is a schematic view in plan of the tractor illustrated in FIGURE 1, with portions thereof removed to illustrate selected elements of the conventional portions of the tractor; and the placement of a second embodiment of the drawbar assembly of the present invention;
FIGURE 4 is a fragmentary plan view of the first embodiment of a drawbar assembly constructed in accordance with the present invention and shown schematically in FIGURE 2;
FIGURE 5 is a fragmentary sectional view of the drawbar assembly taken along line 3-3 of FIGURE 4;
FIGURE 6 is a fragmentary plan view of the second embodiment of a drawbar assembly constructed in accordance with the present invention and shown schematically in FIGURE 3;
FIGURE 7 is a schematic of a hydraulic and electric circuit which may be employed with the drawbar assemblies of any of the foregoing FIGURES;
FIGURE 8 is a schematic of an alternative hydraulic and electrical circuit that may be employed in place of the circuit of FIGURE 7 for operation with the drawbar assemblies of any of the foregoing FIGURES; and
FIGURE 9 illustrates an alternative valve assembly to be used in place of valve 114 in the foregoing embodiments.

In the drawings, like reference numerals refer to like parts throughout the several views.

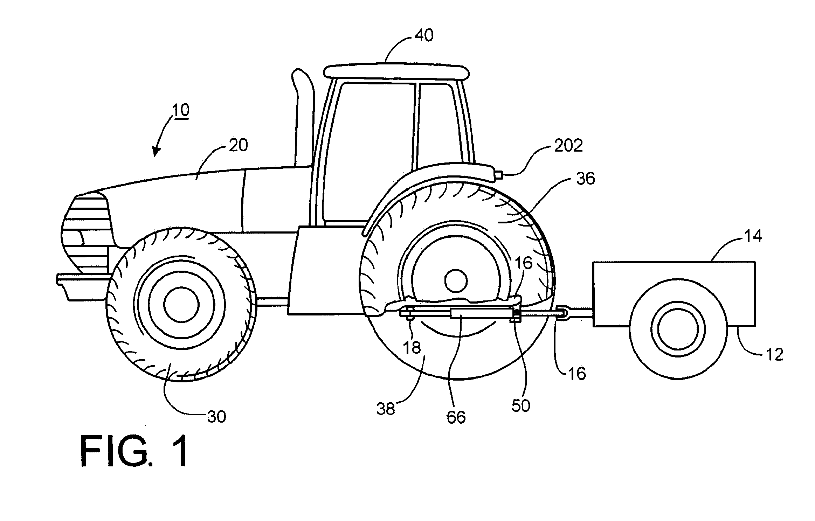

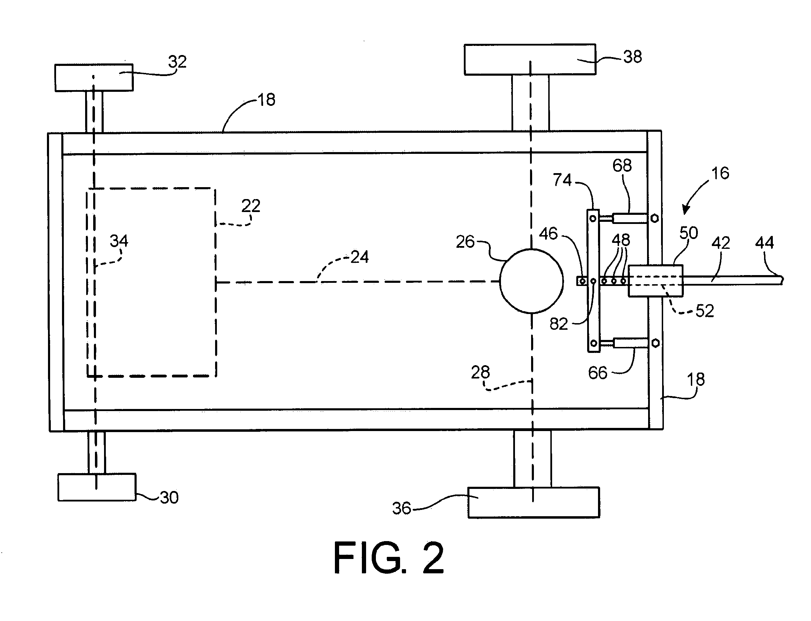

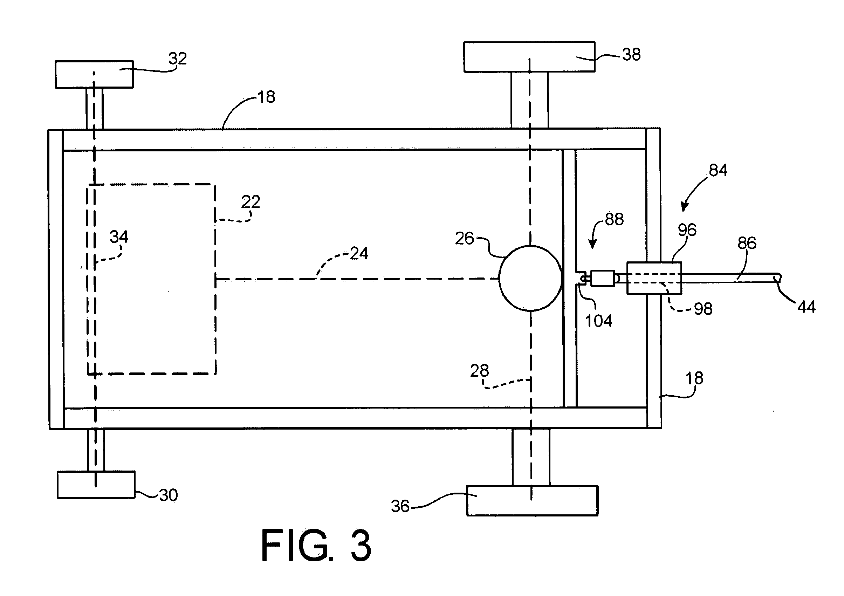

Referring now to the drawings, and particularly Figure 1 thereof, a typical farm machine, in the illustrated instance a tractor 10, is shown pulling a towed implement 12, e.g., a wagon 14, by a drawbar assembly 16, constructed in accordance with the present invention. As shown, the tractor 10 includes a frame 18 mounting an engine compartment 20. As may be seen in Figures 2, 3 in phantom, the tractor includes a drive train comprising, in a conventional manner, an engine 22 for effecting over the ground propulsion of the tractor as by a drive shaft 24 connected to a differential 26 in a rear axle 28. The tractor includes front wheels 30, 32 connected to the frame 18 by an axle 34, and the wheels being operatively controlled through a conventional steering mechanism (not shown) for steering the tractor. The left and right rear drive wheels 36, 38 are mounted outboard of the frame 18 to the rear axle 28. As shown in FIGURE 1, the tractor 10 includes a cab 40 for housing the operator for operational control of the tractor.

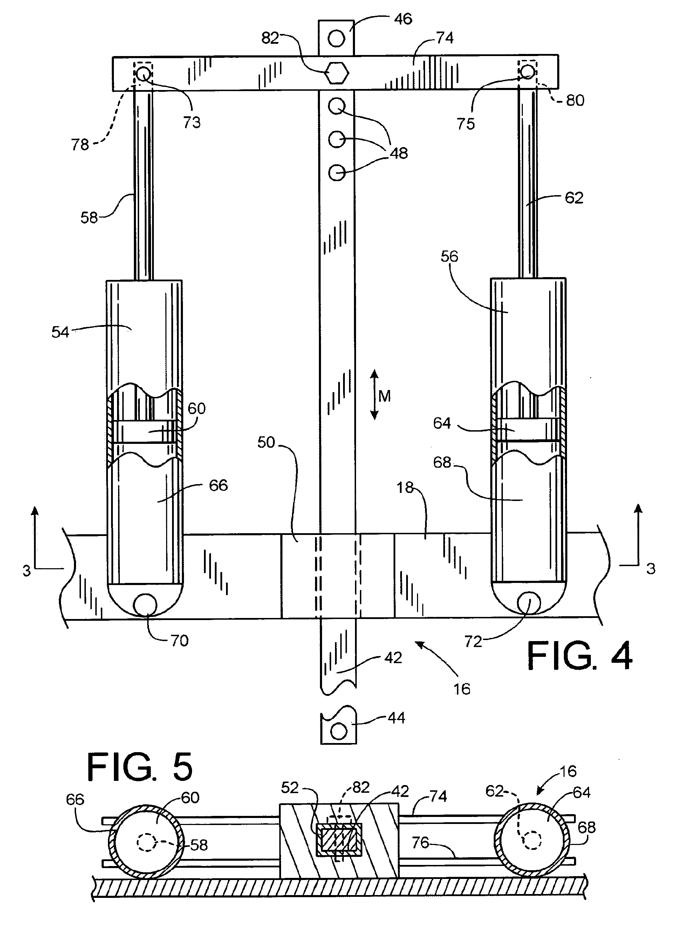

Turning now to Figures 2 and 4, a first preferred embodiment of the drawbar assembly 16 is illustrated therein. As shown, the assembly 16 includes a drawbar 42, in the illustrated instance rectangular in cross section, having an extended first end 44 for attachment or coupling, in any convenient or conventional manner (e.g. pin and hole) to the towed implement 12. As illustrated best in Figure 4, the second end 46 of the drawbar 42 contains at least one, in the illustrated instance a plurality of spaced apart apertures 48 along the axis of the drawbar. In accordance with one feature of the present invention, a sleeve 50 is positioned for secure attachment to the farm vehicle or tractor 10, in the present instance to the frame 18 by any convenient means, such as by a threaded fastener or a weldment, the sleeve being oriented substantially fore and aft and preferably substantially in the same vertical plane of the drive train and coaxial therewith. As shown best in Figure 5, the sleeve 50 has an interior aperture 52 extending longitudinally and generally parallel to the longitudinal axis of the tractor 10, and that is dimensioned to closely embrace and support the drawbar 42 along a portion of its longitudinal or axial dimension and to allow sliding, reciprocating, co-axial movement of the drawbar 42 relative to and in the sleeve 50. In this manner, the movement of the drawbar 42 is limited to axial displacement thereof as shown by the motion arrow M in Figure 4, which is parallel to the longitudinal axis of the tractor. Any turning moment due to angularity of the towed implement 12 is taken up by the frame 18 of the tractor 10.

The working movement of the drawbar 42 when in use is relatively small, on the order of 0.5 to 5.0 inches. Friction between the drawbar 42 and sleeve 50 may be reduced in any convenient manner, for example by a grease fitting for applying grease to the drawbar-sleeve interface. This fitting may be affixed to sleeve 50 to communicate grease through a lubricant passageway in the sleeve 50 to the interior of the sleeve 50 adjacent the draw bar 42. Alternatively, and as shown here, the interior surface of the sleeve 50 may by supplied with a material such as sintered bronze or plastic such as a high molecular weight polyethylene or polypropylene, or other friction-reducing material, as shown herein, to allow for co-axial reciprocation of the drawbar 42 with respect to aperture 52 of sleeve 50 while inhibiting both rotational and turning torques placed on the drawbar 42 due to angular displacement of the towed implement 12. These anti-friction coatings and grease fittings may be used with any of the embodiments illustrated or described herein.

In order to allow for exact initial placement of the drawbar 42 relative to the frame of the tractor 10, and to allow for shock absorption due to inertia changes in the towed implement 12, another feature of the present invention is employed. To this end, and once again referring to Figures 2, 4 and 5, two hydraulic cylinders 54, 56 are provided. The cylinders comprise a hydraulically actuable rod and piston assembly respectively having a casing 66, 68 housing the pistons 60, 64 with their associated rods 58, 62 extensible beyond their casings 66, 68 for reciprocation therein. As will become clearer hereinafter, one of the rods and casings are connected to the drawbar 42, and the other of the rods and casings are adapted for connection to the frame 18 of the farm vehicle or tractor 10.

To this end, the hydraulic cylinder casings 66, 68, are attached, by any convenient means e.g. pins, bolts or the like 70, 72 to the frame 18 of the tractor. The extensible rods 58 and 62 are attached as by pins 73, 75 to a cross link or bar, in the illustrated instance a pair of links 74, 76 that sandwich (see Figure 5) the ends 78, 80, of the rods 58, 62. In a like manner, the links 74, 76 are attached to the drawbar 42 by a pin or bolt 82, for example, extending through the links and a selected one of the apertures 48 in the drawbar. If the hydraulic cylinders 54, 56 are used for axial drawbar positioning, a single aperture 48 in the drawbar 42 may suffice unless a greater initial axial adjustable position for the drawbar 42, than is practical for the throw of the piston and rods of the hydraulic cylinders 54, 56, is desired. As shown, the hydraulic cylinders 54, 56 are laterally spaced apart and preferably are aligned substantially parallel to the sleeve 50. The links 74, 76 are preferably positioned substantially perpendicular to the drawbar 42 and thus the rods 58, 62.

Although not shown, it is well known in the art to provide the ends 78, 80 of the rods 58, 62 with bifurcated ends (not shown) which may be employed to embrace and be connected to a single link instead of a pair of links 74, 76. Of course, to withstand heavy load conditions, a single link would preferably be of heavier construction than individual ones of the pair of links 74, 76 and/or the lateral spacing between the hydraulic cylinders 54, 56 would be preferably less than the spacing would be if a pair of links 74, 76 were employed to reduce load moments.

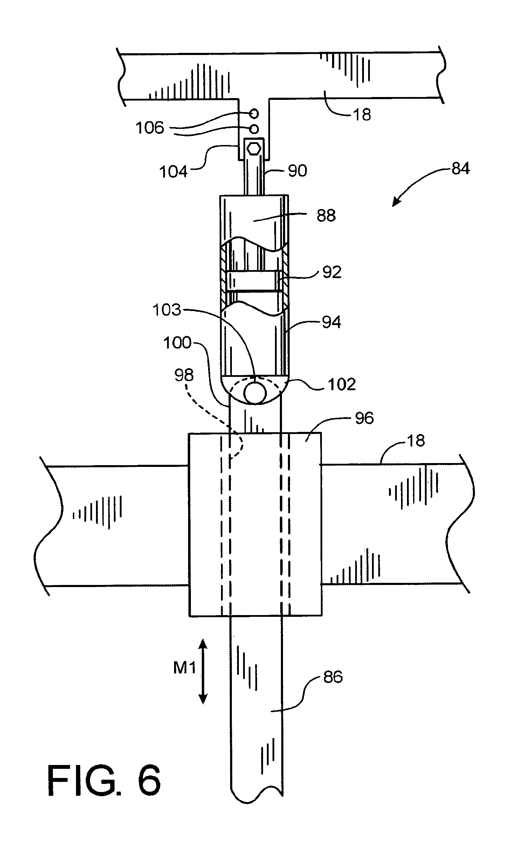

If pulled loads are not exceptionally great or if expected shock loading, and therefore absorption is not as great, or for reduced system complexity a second embodiment of a drawbar assembly 60, constructed in accordance with the present invention, is shown schematically in Figure 3 and in more detail in Figure 6, as replacing the drawbar assembly 16 illustrated in Figures 2, 4 & 5. Referring now to Figure 6, in order to allow for exact initial placement of a drawbar 86 relative to the frame 18 of the tractor 10, and to allow for shock absorption due to inertia changes in an attached towed implement 12, a single hydraulic cylinder 88 may be employed. Drawbar 86 is identical to drawbar 42 in construction and operation. The hydraulic cylinder 88 includes a hydraulically-actuable rod and piston assembly 90, 92 and a casing 94 housing the piston 92 and associated rod 90 respectively, the rod 90 extending beyond the casing 94 for reciprocation therein. As will become clearer hereinafter, one of the rod and casing is connected to the drawbar 86, and the other of the rod and casing is adapted for connection to the frame 18 of the farm vehicle or tractor 10.

Turning once again to Figure 6, a sleeve 96 (identical to the sleeve 50 in Figures 2, 4, & 5 in construction and operation) is positioned for secure attachment to the farm vehicle or tractor 10, in the present instance to the frame 18 by any convenient means, such as by bolt or other threaded fastener, or a weldment. The sleeve 96 has an interior aperture 98 dimensioned to closely embrace the drawbar 86 along a portion of its longitudinal or axial dimension and to allow sliding, reciprocating, co-axial movement of the drawbar relative to and in the sleeve. In this manner, the movement of the drawbar is limited to axial displacement thereof as shown by the motion arrow M1 in Figure 6, and any turning moment due to angularity of the towed implement is taken up by the frame 18 of the tractor 10. Aperture 98 is constructed, operated, and arranged identically to aperture 52.

Although the working movement of the drawbar 86 when in use is relatively small, friction may be reduced in the sleeve 96 in the same manner as in the sleeve 50, for example a grease fitting for applying lubrication to the drawbar-sleeve interface in the sleeve interior aperture 98. Also, the interior aperture 98 of the sleeve may by supplied with a material such as sintered bronze or other friction reducing material to allow for co-axial reciprocation of the drawbar 86 while inhibiting both rotational and turning torques placed on the drawbar due to angular displacement of the towed implement 12.

Turning once again to Figure 6, the end 100 of the drawbar 86 is attached to one of the rod 90 and casing 94 of the hydraulic cylinder 88, in the present instance the casing 94 as by a tab 102 extending from the casing and pinned or bolted to the end 100 of the drawbar 86 as by pin member 103. To facilitate manual axial adjustment or initial positioning of the drawbar 86 relative to the frame 18, one of the frame and rod 90 may have an aperture and the other include an adjustable attachment means, e.g. a pin or bolt. In the illustrated instance, and as shown in Figure 6, another portion of the frame 18 includes a projection or link 104 with a plurality of apertures 106 therein which allows for attaching the rod 90 to a selected aperture 106 as by the bolt or pin, and therefore initializing placement of the drawbar 86 axially of the sleeve 96.

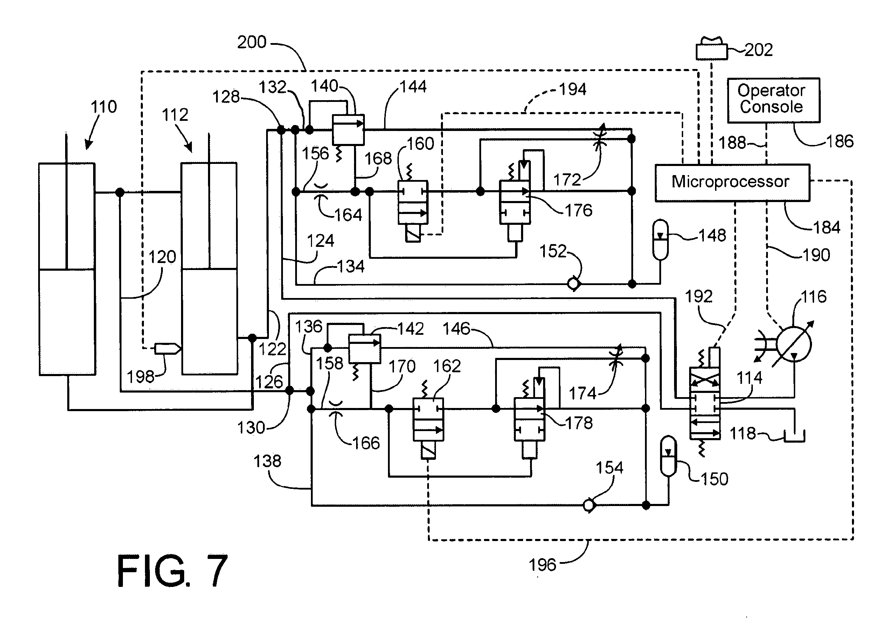

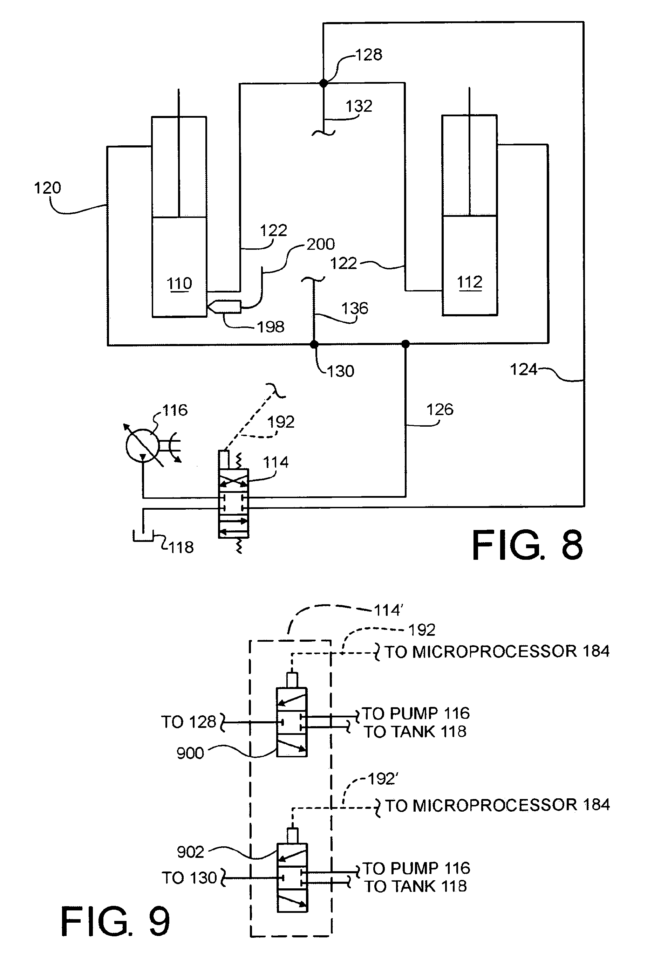

Figures 7 and 8 are schematic representations of two hydraulic and electric circuits that may be employed with either of the drawbar assemblies of Figures 3 and 6; or the drawbar assembly of Figures 2, 4, and 5.

Turning first to Figure 7, hydraulic cylinders 110 and 112 represent cylinders 54 and 56 of Figures 2, 4 and 5 or (in an alternative arrangement) cylinder 110 should be removed from Figure 7 and the remaining cylinder 112 represents cylinder 88 of Figures 3 and 6. Hydraulic cylinders 110 and 112 are shown connected through a four way, 3-position solenoid controlled directional control valve 114, to hydraulic pump 116 and sump 118. Opposing sides of the pistons in cylinders 110 and 112 are connected in parallel to hydraulic lines 120 and 122 respectively, which in turn are connected through lines 124, 126 to the control valve 114 and thus to the pump 116 and sump 118 respectively. The lines 124, 126 are respectively joined at junctions 128, 130 to parallel hydraulic lines 132, 134 and 136, 138. Lines 132, 136 are respectively connected through relief or shock valves 140, 142 to lines 144, 146 from the piston-end of the cylinder to the gas-charged accumulator 148, and from the rod-end of the cylinder to the gas-charged accumulator 150, respectively. The parallel hydraulic lines 134, 138 are connected through anti-cavitation check valves 152, 154 to accumulators 148 and 150, respectively, and serve to allow makeup fluid to flow back into lines 134, 138 from accumulators 148,150 respectively. This occurs when the pressure in the accumulators exceeds the pressure in lines 134, 138, respectively.

Intermediate to parallel hydraulic lines 132, 134, and 136, 138 are third parallel lines 156,158, respectively connected to junctions 128, 130. The lines 156 and 158 respectively are connected to solenoid operated piston end lockout valve 160, and solenoid operated, rod end lockout valve 162 through orifices 164, 166 respectively. Note that the input to lockout valves 160 and 162 is also applied, from lines 168, 170 to the bottom of pressure relief (or shock) valves 140, 142. This arrangement insures that pressure spikes of a predetermined value above the average operating pressure in the cylinders causes valves 140, 142 to open.

During operation, the system may increase the average pressure in the hydraulic cylinders 110, 112 to increase the stiffness of operation, or to reposition the rod and pistons in the cylinders. Whenever this occurs, the average pressure in the cylinder will increase or decrease accordingly. The pressure relief or shock valves 140, 142 are intended to open only when predetermined fluid pressure spikes occur. To make sure the shock valves open at a predetermined pressure above the normal operating pressure (which can be varied, as explained above), orifices 164, 166 conduct hydraulic fluid to the lower end of shock valves 140, 142. However, when sudden pressure spikes (or pressure shocks) occur, orifices 164, 166 block these sudden pressure spikes from being applied to the bottom of valves 140, 142. The sudden pressure spikes are only applied to the top of valves 140, 142. Thus, valves 140, 142 always open when sudden pressure spikes of a predetermined amount above a variable operating pressure occur.

If the operator desires to extend cylinders 110 or 112, thereby extending drawbars 86 (see Figure 6) or drawbar 42 (see Figure 4), the operator can open valve 114, conducting fluid from pump 116 through valve 114 and through line 124 to the head ends of cylinders 110, 112. This fluid will extend the rods of cylinders 110, 112 and therefore extend drawbar 86. This will cause the gradual increase in pressure by the pump and will be applied both to the top of the relief valve 140 and to its bottom through the orifice 164 and the relief valve will not open.

When valve 114 is operated in the above manner, it conducts hydraulic fluid into the head end of cylinders 110, 112 and simultaneously conducts fluid from the rod end of the cylinders through line 126, then through valve 114, and thence back to reservoir 118.

Lockout valves 160, 162 serve to lock and unlock the drawbar, permitting the drawbar to be fixed rigidly with respect to the chassis of the tractor in a first mode of operation, and to provide bidirectional springing by connecting cylinders 110, 112 to gas-charged accumulators 148, 150 in a second mode of operation.

In the position shown in Figure 7, valves 160, 162 are "locked" and prevent hydraulic fluid from flowing from the head ends and rod ends of the cylinders to accumulators 148,150, respectively. With the valves in this position, the cylinder rods are locked in place and the drawbar is rigidly fixed with respect to the chassis of the tractor. Of course, even in this mode of operation, a system relief valve (not shown) functions to relieve extreme pressure spikes, should they occur. When this happens, the drawbar will indeed move with respect to the chassis of the tractor as the cylinder rods move within the cylinder casings.

When lockout valves 160, 162 are in the other of their two positions, they permit hydraulic fluid to be conducted from the head ends and rod ends of the cylinders through orifices 164, 166; through valves 160, 162; and through variable orifices 172, 174; to accumulators 148, 150, respectively.

Note that this flow is not generally bidirectional. Hydraulic fluid does not flow both directions through valves 160, 162. For example, when valves 160, 162 are both open (i.e. when they permit flow therethrough) and the rods inside cylinders 110, 112 are forcibly extended (e.g. by a sudden backward load on the drawbar), fluid is ejected from the rod ends of the cylinders through hydraulic line 120, through orifice 166, through valve 162, through variable orifice 174, and into accumulator 150. This ejection of fluid causes a corresponding pressure drop in the cylinder ends of cylinders 110, 112. This pressure drop causes makeup fluid to be returned to the cylinder ends from accumulator 148, through check valve 152, and back through hydraulic lines 122.

The opposite flow patterns occur when the rods are forcibly pressed into the cylinder casings of cylinders 110, 112. When that happens, hydraulic fluid is ejected from the cylinder ends of cylinders 110, 112 through hydraulic lines 122, through orifice 164, through valve 160, through variable orifice 172, and into accumulator 148. Makeup fluid is supplied to the rod ends of cylinders 110, 112 from accumulator 150, passing through check valve 154, and thence passing through hydraulic lines 120 and into the rod ends of cylinders 110, 112.

Variable orifices 172, 174 are provided to restrict hydraulic fluid flow into the accumulators 148, 150 when it is ejected out of cylinders 110, 112 and thereby damp the movement of cylinders 110, 112.

Valves 176, 178 are disposed between valves 160, 162 and accumulators 148, 150. The check valves 152, 154, permit the undamped flow of hydraulic fluid from the accumulators into the cylinders.

The control of the positioning of the drawbar 86 is by a programmed microprocessor 184, which may be operated from an operator console 186 located in the cab 40 of the tractor 10 and through control line 188. Dashed signal and control lines are shown extending from microprocessor 184 to the pump 116, (i.e. line 190), locking valve 114 (i.e. line 192), lockout valves 160 (i.e. lead 194), 162 (i.e. line 196) and to a position sensor 198 (i.e. line 200). The position sensor 198 may be located in any convenient place to provide a signal indicative of the position of drawbars 42 or 86. Microprocessor 184 is configured to vary the displacement of pump 116 by transmitting a signal over signal line 190. Microprocessor 184 is configured to determine the position of drawbars 42 or 86 by monitoring sensor 198 over signal line 200. Microprocessor 184 is configured to control the position of valves 160, 162, and 114 by applying the appropriate signals to control lines 194, 196, and 192, respectively. Microprocessor 184 is configured to control the operation of the pump 116 in conjunction with the valve 114 to increase or decrease the pressure on the head ends of the hydraulic cylinders 110, 112 or the converse on the rod ends of the hydraulic cylinders 110, 112. Microprocessor 184 does this by operating valve 114 to (1) charge accumulator 148 and simultaneously discharge accumulator 150, or (2) discharge accumulator 148 and alternately charge accumulator 150. This charging and discharging of the accumulators causes the rods to move within their cylinder casings and (since the rods are coupled to drawbar 42, 86) to reposition the drawbar within its sleeve in any longitudinal position the operator desires. In this manner, the operator has control of the drawbar position utilizing the feedback from the sensor. The sensor 198 may take any number of forms, such as an appropriate one of the position sensors disclosed in US-A-5,188,502 issued on Feb. 23, 1993 to Tonsor et al.

Operator console 186 includes appropriate operator input devices such as levers, joysticks, shaft encoders, variable resistors, potentiometers, buttons, and switches that communicate with microprocessor 184 over signal lines 188 to permit the operator to direct microprocessor 184 to extend or to retract the drawbar as desired. Microprocessor 184 is configured to operate in a first automatic mode of operation in which it continuously and periodically monitors the position of the drawbar assembly using sensor 198. Microprocessor 184 is configured to automatically reposition the drawbar when it senses any substantial deviation from the operator's selected drawbar position. Microprocessor 184 is programmed with a proportional-integral-derivative (PID) feedback control loop to monitor both the desired drawbar position setpoint set by the operator using the operator input devices of operator console 186 and the actual position which microprocessor 184 determines by monitoring sensor 198. Microprocessor 184 is programmed to calculate an error signal (the difference between the desired position and the actual position) and to use that error signal in its programmed PID control loop to maintain the drawbar at the operator's desired drawbar position as the drawbar load fluctuates. In a second (manual) mode of operation, microprocessor 184 merely opens and closes valve 114 to reposition the drawbar whenever the operator manipulates the operator input devices in operator console 186. The operator can select the automatic mode or the manual mode using the operator input devices of operator console 186.

Operator console 186 includes a rotary potentiometer (not shown) that is coupled to microprocessor 184 over signal lines 188. This potentiometer permits the operator to manually adjust the firmness of the vehicle's ride. Microprocessor 184 is configured to sense the position of the potentiometer and to vary the position of shock valves 160, 162 accordingly. These shock valves throttle fluid flow through lines 156, 158, permitting or blocking flow from cylinders 110, 112 to accumulators 148, 150. The operator controls the firmness of the drawbar suspension by adjusting the potentiometer in operator console 186 to regulate the amount of fluid flow restriction provided by valves 160, 162. Throttling valves 160, 162 do not change the spring rate of the drawbar. That is controlled by varying the preload pressure in accumulators 148, 150. Throttling valves 160, 162 do vary the degree of damping.

An alternative, and more simple hydraulic control circuit for the position of the drawbar assembly 16 of Figures 4 and 5, and alternatively for the drawbar assembly 84 of Figure 6 is shown in Figure 8. As illustrated schematically therein, the hydraulic circuit merely parallels the construction and operation of hydraulic cylinders 110, 112, the pump 116, sump 118, and valve 114, all being identical to that shown in Figure 7, and therefore bear the same identifying numerals. As also shown in Figure 7, the hydraulic pump 116 and sump 118 output and input is provided to junctions 128, 130 through hydraulic lines 124, 126. Unlike Figure 7, however, accumulators 148 and 150 are shown coupled directly to the cylinder ends and the rod ends at junctions 128, 130, respectively, of cylinders 110, 112, without the additional and intermediate circuitry shown in Figure 7. As in Figure 7, sensor 198 is provided to indicate the position of the drawbar, and to communicate that position to microprocessor 184 over signal line 200. Microprocessor 184 (not shown in Figure 9) is similarly configured to provide the same automatic mode and manual mode of drawbar position control operation by controlling the opening and closing of valve 114.

Figure 9 illustrates an alternative valve assembly 114' to replace valve 114 of the foregoing Figures. In this embodiment, valve 114 has been replaced with valve assembly 114', which includes two separate valves, 900, 902. Valves 900, 902 are coupled to the hydraulic circuit in place of valve 114. In the foregoing Figures, valve 114 has one signal line 192 coupling it to microprocessor 184. In the embodiment of Figure 9, two signal lines 192 and 192' couple valves 900, 902 to microprocessor 184.

Microprocessor 184 is configured to independently control the positions of valves 900, 902 by transmitting signals over signal lines 192, 192'. Like valve 114, valves 900, 902 are proportional control valves that are configured to alternatively couple the pump 116 and reservoir 118 to nodes 128 and 130.

With this arrangement, microprocessor 184 can independently connect the pump to one or both of nodes 128 and 130, and can independently connect the reservoir to one or both of nodes 128 and 130.

Microprocessor 184 is configured to operate valves 900, 902 identically as described above for valve 114. This identical control is possible since valves 900, 902 can be driven independently and in opposite directions to conduct hydraulic fluid from the pump to either of nodes 128, 130 and from the other of nodes 128, 130 to the reservoir or tank 118.

In addition, however, and due to capability to independently control valves 900, 902, through the individual signal lines 192, 192' microprocessor 184 can simultaneously charge both accumulators 148, 150 and can simultaneously discharge both of accumulators 148, 150 by connecting both node 128 and node 130 to the pump or alternatively, to connect both node 128 and node 130 to the tank or reservoir.

Operator console 186 includes a stiffness switch that is coupled by signal line 188 to microprocessor 184. When manipulated by the operator, this switch signals microprocessor 184 to either increase the stiffness (i.e. the spring constant) of the drawbar or to decrease the stiffness of the drawbar.

Microprocessor 184 is configured to responsively increase the stiffness of the system by simultaneously charging accumulator 148 and accumulator 150 when the operator moves the stiffness switch in one direction. Microprocessor 184 does this by driving valves 900, 902 to connect pump 116 simultaneously to nodes 128, 130, thereby simultaneously charging the accumulators. By simultaneously charging the accumulators, microprocessor 184 increases the pressure applied to opposing sides of the pistons of cylinders 110, 112. Since the increase in pressure is applied simultaneously to both sides of the piston, the spring constant of the system increases, yet the pistons stay in the same position.

Microprocessor 184 is configured to responsively decrease the stiffness of the system by simultaneously discharging accumulators 148 and 150 when the operator moves the stiffness switch in the other direction. Microprocessor 184 does this by driving valves 900, 902 to simultaneously connect reservoir 118 to nodes 128, 130, thereby simultaneously discharging the accumulators. By simultaneously discharging the accumulators, microprocessor 184 decreases the pressure applied to opposing sides of the pistons of cylinders 110, 112. Since the decrease in pressure is applied simultaneously to both sides of the piston, the spring constant of the system decreases yet the pistons stay in the same position.

Thus, microprocessor 184 is configured to provide the independent adjustment of drawbar position as well as provide the independent adjustment of drawbar stiffness.

Referring back to Figure 7, the system includes another switch 202 that is coupled to the rear of the tractor adjacent to the drawbar. Switch 202 is preferably a toggle switch, having two momentary contact positions and a central neutral position to which it returns when the operator releases it. Switch 202 is called a "hitch position switch" since it extends and retracts the drawbar whenever the operator manipulates it.

Microprocessor 184 is configured to selectively extend and retract the drawbar whenever the operator depresses switch 202. When the operator depresses switch 202 in a first "extend" direction, microprocessor 184 signals valve 114 (or valve assembly 114') to conduct hydraulic fluid from pump 116 to node 128, and to conduct hydraulic fluid from node 130 to reservoir 118. This causes the pistons to extend further from their cylinders, and the drawbar to responsively retract closer to the rear of the tractor.

When the operator depresses switch 202 in a second "retract" direction, microprocessor 184 signals valve 114 (or valve assembly 114') to conduct hydraulic fluid from pump 116 to node 130, and to conduct hydraulic fluid from node 128 to reservoir 118. This causes the pistons to retract further into their cylinders 110, 112, and the drawbar to responsively extend further backward from the rear of the tractor 10.

In this manner, the operator is able to move the drawbar forward or backward until the drawbar is aligned with the hitch of the implement 12 to which the drawbar will be coupled. Once the operator has the drawbar in the proper position, he can merely insert a pin or engage some other coupling member to both the implement hitch and the drawbar, thereby coupling the two together. This easy adjustment of drawbar position reduces the need to perfectly position the tractor 10 in the desired position with respect to the implement when coupling the two together. Since tractors 10 and implements 12 are often coupled and uncoupled over rough, uneven ground, permitting the positioning of the drawbar while the operator is dismounted adjacent to the hitch and drawbar itself is a significant advantage.

Thus, the apparatus of the present invention provides a drawbar assembly that not only facilitates variable shock absorption for wide variations in load conditions in farm machinery caused by implement pulling or pushing (e.g. by changing stiffness) but also allows for adjustment of the length of the drawbar while permitting wide load variations in towed load, inertial load changes, and positioning of the drawbar for engagement with an implement it is on.

While the embodiments illustrated in the various drawings described above are presently preferred, it should be understood that those embodiments are offered by way of example only. The invention is not intended to be limited to any particular embodiment. As yet another example, additional hydraulic cylinders may be similarly provided and coupled in parallel to the illustrated cylinders. As yet another example, the electronic circuitry identified herein as microprocessor 184 may be a single integrated circuit, or a combination of integrated circuits. It may also be an electronic circuit including integral valve drivers and sensor signal conditioning circuits and operator input device signal conditioning circuits, RAM, ROM, and CPU. It may be configured to perform all the calculations described above itself, or alternatively may transmit the operator's signals on signal lines 186 to another microprocessor to perform some or all of the calculations described herein. Microprocessor 184 may be networked over a wide area network, local-area network, or controller area network to communicate with other microprocessors. Microprocessor 184 may be alternatively configured to operate in either the above-described automatic mode, or the above-described manual mode, but not both. As yet another example, microprocessor 184 may be replaced with hydraulic, pneumatic, or mechanical circuits that provide some or all of the microprocessor functions described above. As a further example, microprocessor 184 may be eliminated. In this microprocessor-free configuration, operator input devices on operator console 186 are connected directly to valves 160, 162, and 114 for direct actuation by the operator.

## Claims

1. A drawbar assembly (16;84) for coupling a farm vehicle (10) to a towed implement (12), the assembly (16;84) comprising:
- a drawbar (42;86), including an extended end (44) for coupling to said towed implement (12);
- a sleeve (50;96) for secure attachment to the frame (18) of said farm vehicle (10) and dimensioned interiorly thereof to embrace said drawbar (42;86), and allow sliding, reciprocating, co-axial movement of said drawbar (42;86) in said sleeve (50;96);
- at least one hydraulic cylinder (54,56;88) comprising a hydraulically actuable piston (60,64;92) and rod assembly (58,62;90) and a casing (66,68;94), housing said piston (60,64;92) and said rod (58,62;90) therein, with said rod (58,62;90) extensible beyond said casing (66,68;94) for reciprocation therein; one of said rod (58,62;90) and casing (66,68;94) connected to said drawbar (42;86) and the other of said rod (58,62;90) and casing (66,68;94) for connection to said farm vehicle (10); and
- a hydraulic system connected to said at least one hydraulic cylinder (54,56;88) and operable to effect adjustment of said rod (58, 62; 90) relative to said casing (66,68;94), and to withstand pressure overloads caused by shocks to said drawbar (42;86); both position and load changes affecting said drawbar (42;86) being accommodated in said at least one hydraulic cylinder (54, 56; 88) ; said hydaulic system including a variable pressure relief valve (140,142) connected to an accumulator (148,150) for absorbing shock loads to said drawbar (42; 86) ;
**characterized in that** said hydraulic system further includes means (164,166,168,170) to inhibit application of gradual pressure increase to said pressure relief valve (140, 142) from being applied through said pressure relief valve (140,142) to said accumulator (148,150).

2. A drawbar assembly (16;84) according to claim 1, **characterized in that** said inhibit means (164,166,168,170) include an orifice (164,166) that conducts hydraulic fluid through a line (168,170) to an end of said pressure relief valve (140,142).

3. A drawbar assembly (16;84) according to claim 1 or 2, **characterized in that** said pressure relief valve (140,142) will open when pressure spikes of a predetermined value above average operating pressure occur.

4. A drawbar assembly (16;84) according to claim 1 to 3, **characterized in that** said sleeve (50;96) includes a lubricant to facilitate ease of axial movement of said drawbar (42;86).

5. A drawbar assembly (16;84) according to any of the preceding claims, **characterized in that** said sleeve (50;96) includes a lubricating interface between said drawbar (42;86) and the interior of said sleeve (50;96) to facilitate ease of axial movement of said drawbar (42;86).

6. A drawbar assembly (16;84) according to any of the preceding claims, **characterized in that** said hydraulic system includes:
- a sensor (198) mounted for indicating the axial position of said drawbar (42;86) and mounted on said tractor (10);
- a programmed microprocessor (184) for receiving an input signal from said sensor (198); and
- a hydraulic pump (116) connected to said at least one hydraulic cylinder (54,56) to position said cylinder (54,56) according said input signal received from the sensor (198).

7. A drawbar assembly (16;84) according to any of the preceding claims, **characterized in that** said hydraulic system is configured to vary stiffness of drawbar movement in response to operator manipulation of an operator input device (186).

8. A drawbar assembly (16;84) according claim 7, **characterized in that** said operator input device (186) is a toggle switch disposed in an operator compartment of said farm vehicle (10).

9. A drawbar assembly (16;84) according to any of the preceding claims, **characterized in that** said hydraulic system is configured to extend and retract said drawbar assembly (16;84) with respect to said farm vehicle (10) in response to operator manipulation of an operator input device.

10. A drawbar assembly (16;84) according to claim 9, **characterized in that** said operator input device is a toggle switch (202) fixed to the rear of said farm vehicle (10) adjacent to said drawbar assembly (16;84).

11. A drawbar assembly (16) according to any of the preceding claims, **characterized in that** said assembly includes a link (74,76) for connection to said drawbar (42) at a selected position along the length thereof, disposed oppositely of the extended end (44) of said drawbar (42) and of said sleeve (50), and intermediate said hydraulic cylinder (54;56) and said drawbar (42).

12. A drawbar assembly (16) according to claim 11, **characterized in that** said assembly includes a second hydraulic cylinder (54,56), said second hydraulic cylinder (54,56) including a casing (66,68) and a rod (58,62) extending therefrom, with one of said rod (58;62) and casing (66,68) being attached to said link (74,76) and the other of said rod (58,62) and casing (66,68) being attached to said farm vehicle (10).

13. A drawbar assembly (16) according to claim 11 or 12, **characterized in that** said link (74,76) is pivotally connected to said drawbar (42), along said length thereof, at approximately a right angle with respect to the axis of said drawbar (42) and said second hydraulic cylinder (54,56) is connected to said link (74,76) and said farm vehicle (10), approximately parallel to the axis of the drawbar (42).

14. A drawbar assembly (16) according to claim 11 to 13, **characterized in that** said first mentioned hydraulic cylinder (54,56) is connected to said link (74,76) on the opposite side thereof from said second hydraulic cylinder (54,56).

15. A drawbar assembly (84) according to claim 1 to 10, **characterized in that** said assembly (84) includes a link (104) for connection to said cylinder (88) at a selected position along the length of said link (104), disposed oppositely of the extended end (44) of said drawbar (86) and of said sleeve (96), and intermediate said hydraulic cylinder (88) and said farm vehicle (10).

16. A drawbar assembly (84) according to claim 15, **characterized in that** said cylinder (88) is connected to said link (104) substantially co-axial with respect to said drawbar (86).

## Patentansprüche

1. Deichsel-Baugruppe (16; 84) zum Verbinden eines landwirtschaftlichen Fahrzeuges (10) mit einem geschleppten Arbeitsgerät (12), wobei die Baugruppe (16; 84) Folgendes umfasst:
- eine Deichsel (42; 86), die ein verlängertes Ende (44) zum Verbinden mit dem geschleppten Arbeitsgerät (12) einschließt;
- eine Hülse (50; 96) für die sichere Befestigung an dem Fahrgestell (18) des landwirtschaftlichen Fahrzeuges (10), die in ihrem Inneren so dimensioniert ist, dass sie die Deichsel (42; 86) umgreift und ein Gleiten, eine Hin- und Herbewegung und eine koaxiale Bewegung der Deichsel (42; 86) in der Hülse (50; 96) ermöglicht;
- zumindest einen Hydraulikzylinder (54, 56; 88), der einen hydraulisch betätigbaren Kolben (60, 64; 92) und eine Kolbenstangen-Baugruppe (58, 62; 90) und ein Gehäuse (66, 68; 94) umfasst, das den Kolben (60, 64; 92) und die Kolbenstange (58, 62; 90) darin aufnimmt, wobei die Kolbenstange (58, 62; 90) jenseits des Gehäuses (66, 68; 94) für eine Hin- und Herbewegung in diesem erstreckbar ist; wobei entweder die Kolbenstange (58, 62; 90) oder das Gehäuse (66, 68; 94) mit der Deichsel (42; 86) verbunden ist und das Gehäuse (66, 68; 94) bzw. die Kolbenstange (58, 62; 90) zur Verbindung mit dem landwirtschaftlichen Fahrzeug (10) bestimmt ist; und
- ein Hydrauliksystem, das mit dem zumindest einen Hydraulikzylinder (54, 56; 88) verbunden und betreibbar ist, um eine Einstellung der Kolbenstange (58, 62; 90) gegenüber dem Gehäuse (66, 68; 94) zu bewirken und um Druck-Überlastungen zu widerstehen, die durch Stöße auf die Deichsel (42; 86) hervorgerufen werden; wobei sowohl Positions- als auch Laständerungen, die auf die Deichsel (42; 86) einwirken, in dem zumindest einen Hydraulikzylinder (54, 56; 88) aufgenommen werden; und wobei das Hydrauliksystem ein veränderliches Druck-Entlastungsventil (140, 142) einschließt, das mit einem Akkumulator (148, 150) zum Absorbieren von Stoßlasten auf die Deichsel (42; 86) verbunden ist;
**dadurch gekennzeichnet, dass** das Hydrauliksystem weiterhin Einrichtungen (164, 166, 168, 170) einschließt, die Anlegen eines an das Druckentlastungsventil (140, 142) angelegten graduellen Druckanstieg über das Druckentlastungsventil (140, 142) an den Akkumulator (148, 150) sperren.

2. Deichsel-Baugruppe (16; 84) nach Anspruch 1, **dadurch gekennzeichnet, dass** die Sperreinrichtungen (164, 166, 168, 170) eine Drossel (164, 166) einschließen, die Hydraulikflüssigkeit über eine Leitung (168, 170) einem Ende des Druckentlastungsventils (140, 142) zuführt.

3. Deichsel-Baugruppe (16; 84) nach Anspruch 1 oder 2, **dadurch gekennzeichnet, dass** sich das Druckentlastungsventil (140, 142) öffnet, wenn Druckspitzen mit einem vorgegebenen Wert oberhalb eines mittleren Betriebsdruckes auftreten.

4. Deichsel-Baugruppe (16; 84) nach Anspruch 1 bis 3, **dadurch gekennzeichnet, dass** die Hülse (50; 96) ein Schmiermittel einschließt, um eine leichte Axialbewegung der Deichsel (42; 86) zu ermöglichen.

5. Deichsel-Baugruppe (16; 84) nach einem der vorhergehenden Ansprüche, **dadurch gekennzeichnet, dass** die Hülse (50; 96) eine Schmiermittel-Grenzfläche zwischen der Deichsel (42; 86) und dem Inneren der Hülse (50; 96) einschließt, um eine leichte Axialbewegung der Deichsel (42; 86) zu ermöglichen.

6. Deichsel-Baugruppe (16; 84) nach einem der vorhergehenden Ansprüche, **dadurch gekennzeichnet, dass** das Hydrauliksystem Folgendes einschließt:
- einen Sensor (198), der für eine Anzeige der Axialposition der Deichsel (42; 86) befestigt und auf dem Traktor (10) angeordnet ist;
- einen programmierten Mikroprozessor (184) zum Empfang eines Eingangssignals von dem Sensor (198); und
- eine Hydraulikpumpe (116), die mit dem zumindest einen Hydraulikzylinder (54, 56) verbunden ist, um den Zylinder (54, 56) in Abhängigkeit von dem Eingangssignal zu positionieren, das von dem Sensor (198) empfangen wird.

7. Deichsel-Baugruppe (16; 84) nach einem der vorhergehenden Ansprüche, **dadurch gekennzeichnet, dass** das Hydrauliksystem so konfiguriert ist, dass es die Steifigkeit der Deichsel-Bewegung in Abhängigkeit von einer Betätigung einer Fahrer-Eingabeeinrichtung (186) durch den Fahrer ändert.

8. Deichsel-Baugruppe (16; 84) nach Anspruch 7, **dadurch gekennzeichnet, dass** die Fahrer-Eingabeeinrichtung (186) ein Kippschalter ist, der in einem Fahrer-Abteil des landwirtschaftlichen Fahrzeuges (10) angeordnet ist.

9. Deichsel-Baugruppe (16; 84) nach einem der vorhergehenden Ansprüche, **dadurch gekennzeichnet, dass** das Hydrauliksystem so konfiguriert ist, dass es die Deichsel-Baugruppe (16; 84) bezüglich des landwirtschaftlichen Fahrzeuges (10) in Abhängigkeit von der Betätigung einer Fahrer-Eingabeeinrichtung durch den Fahrer ausfährt und einzieht.

10. Deichsel-Baugruppe (16; 84) nach Anspruch 9, **dadurch gekennzeichnet, dass** die Fahrer-Eingabeeinrichtung ein Kippschalter (202) ist, der an der Rückseite des landwirtschaftlichen Fahrzeuges (10) benachbart zur Deichsel-Baugruppe (16; 84) befestigt ist.

11. Deichsel-Baugruppe (16) nach einem der vorhergehenden Ansprüche, **dadurch gekennzeichnet, dass** die Baugruppe ein Verbindungsglied (74, 76) zur Verbindung mit der Deichsel (42) an einer ausgewählten Position entlang seiner Länge einschließt, die entgegengesetzt zu dem verlängerten Ende (44) der Deichsel (42) und der Hülse (50) angeordnet ist und zwischen dem Hydraulikzylinder (54; 56) und der Deichsel (42) angeordnet ist.

12. Deichsel-Baugruppe (16) nach Anspruch 11, **dadurch gekennzeichnet, dass** die Baugruppe einen zweiten Hydraulikzylinder (54, 56) einschließt, dass der zweite Hydraulikzylinder (54, 56) ein Gehäuse (66, 68) und eine sich hieraus erstreckende Kolbenstange (58, 62) aufweist, wobei die Kolbenstange (58, 62) oder das Gehäuse (66, 68) an dem Verbindungsglied (74, 76) angebracht ist, während die Kolbenstange (58, 62) oder das Gehäuse (66, 68) an dem landwirtschaftlichen Fahrzeug (10) befestigt ist.

13. Deichsel-Baugruppe (16) nach Anspruch 11 oder 12, **dadurch gekennzeichnet, dass** das Verbindungsglied (74, 76) schwenkbar mit der Deichsel (42) entlang deren Länge unter angenähert einem rechten Winkel bezüglich der Achse der Deichsel (42) verbunden ist, und dass der zweite Hydraulikzylinder (54, 56) mit dem Verbindungsglied (74, 76) und dem landwirtschaftlichen Fahrzeug (10) angenähert parallel zur Achse der Deichsel (42) verbunden ist.

14. Deichsel-Baugruppe (16) nach Anspruch 11 bis Anspruch 13, **dadurch gekennzeichnet, dass** der erstgenannte Hydraulikzylinder (54, 56) mit dem Verbindungsglied (74, 76) auf dessen von dem zweiten Hydraulikzylinder aus gesehen entgegengesetzten Seite verbunden ist.

15. Deichsel-Baugruppe (84) nach Anspruch 1 bis Anspruch 10, **dadurch gekennzeichnet, dass** die Baugruppe (84) ein Verbindungsglied (104) zur Verbindung mit dem Zylinder (88) an einer ausgewählten Position entlang der Länge des Verbindungsgliedes (104) einschließt, die entgegengesetzt zu dem verlängerten Ende (44) der Deichsel (86) und der Hülse (96) und zwischen dem Hydraulikzylinder (88) und dem landwirtschaftlichen Fahrzeug (10) liegt.

16. Deichsel-Baugruppe (84) nach Anspruch 15, **dadurch gekennzeichnet, dass** der Zylinder (88) mit dem Verbindungsglied (104) im Wesentlichen koaxial bezüglich der Deichsel (86) verbunden ist.

## Revendications

1. Ensemble de barre d'attelage (16;84) permettant d'accoupler un véhicule agricole (10) à un outil tracté (12), l'ensemble (16;84) comprenant :
- une barre d'attelage (42;86), incluant une extrémité étendue (44) pour coupler ledit outil tracté (12),
- un manchon (50;96) pour maintenir la fixation au châssis (18) du dit véhicule agricole (10) et dimensionné à l'intérieur de celui-ci pour encercler ladite barre d'attelage (42;86), et permettre un mouvement de glissement, alternatif, coaxial de ladite barre d'attelage (42;86) dans ledit manchon (50;96),
- au moins un vérin hydraulique (54, 56, 88) comprenant un ensemble de piston (60, 64;92) et de tige (58, 62;90) actionnable hydrauliquement et un corps (66, 68;94), logeant ledit piston (60, 64;92) et ladite tige (58, 62;90) à l'intérieur, ladite tige (58, 62;90) étant extensible au delà du dit corps (66, 68;94) pour effectuer un mouvement de va-et-vient à l'intérieur, l'un de ladite tige (58, 62;90) et du dit corps (66, 68;94) étant accouplé à ladite barre d'attelage (42;86) et l'autre de ladite tige (58, 62;90) et du dit corps (66, 68;94) étant accouplé au dit véhicule agricole (10), et
- un système hydraulique relié au dit au moins un vérin hydraulique (54, 56;88) et pouvant fonctionner pour opérer un ajustement de ladite tige (58, 62;90) vis-à-vis du dit corps (66, 68;94), et pour résister à des surcharges de pression provoquées par des chocs sur ladite barre d'attelage (42;86), des modifications à la fois de position et de charge affectant ladite barre d'attelage (42;86) étant supportées dans ledit au moins un vérin hydraulique (54, 56;88) et ledit système hydraulique incluant une soupape de décharge de pression variable (140, 142) reliée à un accumulateur (148, 150) pour absorber les charges de choc sur ladite barre d'attelage (42;86),
**caractérisé en ce que** ledit système hydraulique comprend en plus un dispositif (164, 166, 168, 170) pour neutraliser l'application d'une augmentation de pression graduelle sur ladite soupape de décharge de pression (140, 142) exercée au travers de ladite soupape de décharge de pression (140, 142) vers ledit accumulateur (148, 150).

2. Ensemble de barre d'attelage (16;84) selon la revendication 1, **caractérisé en ce que** ledit dispositif de neutralisation (164, 166, 168, 170) inclut un orifice (164, 166) qui dirige le fluide hydraulique au travers d'une ligne (168, 170) vers une extrémité de ladite soupape de décharge de pression (140, 142).

3. Ensemble de barre d'attelage (16;84) selon la revendication 1 ou 2, **caractérisé en ce que** ladite soupape de décharge de pression (140, 142) ouvrira lorsque des pics de pression d'une valeur prédéterminée au-dessus de la pression de service moyenne se produisent.

4. Ensemble de barre d'attelage (16;84) selon la revendication 1 à 3, **caractérisé en ce que** ledit manchon (50;96) inclut un lubrifiant pour faciliter le mouvement axial de ladite barre d'attelage (42;86).

5. Ensemble de barre d'attelage (16;84) selon l'une quelconque des revendications précédentes, **caractérisé en ce que** ledit manchon (50;96) inclut une interface lubrifiante entre ladite barre d'attelage (42;86) et l'intérieur du dit manchon (50;96) pour faciliter le mouvement axial de la dite barre d'attelage (42;86).

6. Ensemble de barre d'attelage (16;84) selon l'une quelconque des revendications précédentes, **caractérisé en ce que** ledit système hydraulique inclut :
- un capteur (198) monté pour indiquer la position axiale de ladite barre d'attelage (42;86) et fixé sur ledit tracteur (10),
- un microprocesseur programmé (184) destiné à recevoir un signal d'entrée du dit capteur (198), et
- une pompe hydraulique (116) reliée au dit au moins un vérin hydraulique (54, 56) pour positionner ledit vérin (54, 56) en fonction du dit signal d'entrée reçu du capteur (198).

7. Ensemble de barre d'attelage (16;84) selon l'une quelconque des revendications précédentes, **caractérisé en ce que** ledit système hydraulique est configuré pour faire varier la rigidité du mouvement de la barre d'attelage en réponse à une manipulation par le conducteur d'un dispositif d'entrée de conducteur (186).

8. Ensemble de barre d'attelage (16;84) selon la revendication 7, **caractérisé en ce que** ledit dispositif d'entrée de conducteur (186) est un interrupteur à levier disposé dans une cabine de conducteur du dit véhicule agricole (10).

9. Ensemble de barre d'attelage (16;84) selon l'une quelconque des revendications précédentes, **caractérisé en ce que** ledit système hydraulique est configuré pour déployer et rétracter ledit ensemble de barre d'attelage (16;84) vis-à-vis du dit véhicule agricole (10) en réponse à une manipulation par le conducteur d'un dispositif d'entrée de conducteur.

10. Ensemble de barre d'attelage (16;84) selon la revendication 9, **caractérisé en ce que** ledit dispositif d'entrée de conducteur est un interrupteur à levier (202) fixé à l'arrière du dit véhicule agricole (10) de façon adjacente au dit ensemble de barre d'attelage (16;84).

11. Ensemble de barre d'attelage (16) selon l'une quelconque des revendications précédentes, **caractérisé en ce que** ledit ensemble comprend une bielle (74, 76) destinée à être connectée à ladite barre d'attelage (42) à une position sélectionnée le long de la longueur de celle-ci, disposée en face de l'extrémité étendue (44) de ladite barre d'attelage (42) et du dit manchon (50), et entre ledit vérin hydraulique (54;56) et ladite barre d'attelage (42).

12. Ensemble de barre d'attelage (16) selon la revendication 11, **caractérisé en ce que** ledit ensemble comprend un second vérin hydraulique (54, 56), ledit second vérin hydraulique (54, 56) incluant un corps (66, 68) et une tige (58, 62) s'étendant à partir de celui-ci, l'un de ladite tige (58;62) et du dit corps (66, 68) étant fixé à ladite bielle (74, 76) et l'autre de ladite tige (58, 62) et du dit corps (66, 68) étant fixé au dit véhicule agricole (10).

13. Ensemble de barre d'attelage (16) selon la revendication 11 ou 12, **caractérisé en ce que** ladite bielle (74, 76) est accouplée de façon pivotante à ladite barre d'attelage (42), le long de ladite longueur de celle-ci, à approximativement un angle droit vis-à-vis de l'axe de ladite barre d'attelage (42) et ledit second vérin hydraulique (54, 56) est accouplé à ladite bielle (74, 76) et au dit véhicule agricole (10), de façon à être approximativement parallèle à l'axe de la barre d'attelage (42).

14. Ensemble de barre d'attelage (16) selon la revendication 11 à 13, **caractérisé en ce que** ledit premier vérin hydraulique mentionné (54, 56) est accouplé à ladite bielle (74, 76) sur le côté opposé de celle-ci vis-à-vis du dit second vérin hydraulique (54, 56).

15. Ensemble de barre d'attelage (84) selon la revendication 1 à 10, **caractérisé en ce que** ledit ensemble (84) comprend une bielle (104) destinée à être connectée au dit vérin (88) à une position sélectionnée le long de la longueur de ladite bielle (104), disposée en face de l'extrémité étendue (44) de ladite barre d'attelage (86) et du dit manchon (96), et entre le dit vérin hydraulique (88) et ledit véhicule agricole (10).

16. Ensemble de barre d'attelage (84) selon la revendication 15, **caractérisé en ce que** ledit vérin (88) est accouplé à ladite bielle (104) de façon sensiblement coaxiale vis-à-vis de ladite barre d'attelage (86).
